Europäisches Patentamt

**European Patent Office**  (11) Publication number: **0 049 027**

Office européen des brevets  **A1**

(12) **EUROPEAN PATENT APPLICATION**

(21) Application number: **81302511.1**

(22) Date of filing: **05.06.81**

(51) Int. Cl.³: **G 01 P 5/00,** G 01 P 5/08, G 01 F 1/56

(30) Priority: **25.09.80 CA 361037**

(71) Applicant: **Reimer, Ernest Michael, 1 Atlantic Avenue, St. John's Newfoundland (CA)**

(43) Date of publication of application: **07.04.82 Bulletin 82/14**

(72) Inventor: **Reimer, Ernest Michael, 1 Atlantic Avenue, St. John's Newfoundland (CA)**

(74) Representative: **Hartley, David et al, c/o Withers & Rogers 4 Dyer's Buildings Holborn, London, EC1N 2JT (GB)**

(84) Designated Contracting States: **AT BE CH DE FR GB IT LI LU NL SE**

(54) **Electrochemical anemometer.**

(57) An electrochemical anemometer (10 or 50) is provided for measuring electrolyte motion, e.g., relative local motion of oxygen-dissolving aqueous electrolyte, e.g., sea water or brackish water. The anemometer includes: (a) a housing (11 or 51); (b) an exposed first electrode (14 or 52), e.g., of silver, attached to the housing; (c) an exposed second electrode (13 or 53), e.g., of platinum, attached to the housing (11 or 51) and spaced apart from the first electrode (14 or 52); (d) an amplifier (110) having input and output disposed in the housing (11 or 51) and having its input connected either to the first electrode (14 or 52) or to the second electrode (13 or 53); and (e) an electrical power supply (110) to the other of the first electrode or the second electrode and to the amplifier means, and for conducting the output of the amplifier to a display for the signals of the output. In this way, the signals are proportional to the oxygen transport rates, which are, in turn, an indication of the relative electrolyte motion in the region of the electrolyte adjacent one of the electrodes.

0049027

- 1 -

## Electrochemical Anemometer

This invention relates to an electrochemical anemometer, namely appara- and method for determining the relative motion of an electrolyte, e.g., for the measurement of relative near surface velocity of sea water or brackish water and turbulence in sea water, based on the principles of specific ion polarography.

## Technical Field to which the Invention Relates

T.R. Kretschmer et al published an interim report identified as "AD-A085 286/3, Nov. 79, 43P. (CEL-TN-1564) Interim Rept. Jul 76-Jul 79," describing a thin film thermal sensor for measuring ocean current profiles. Using the sensor, current velocity was determined by measuring the resistance changes in each of four platinum films positioned on the surface of the cylindrical sensor substrate. The apparatus used a high-strength ceramic substrate, coating systems to prevent water penetration into the sensor, and an electrolytic hypochlorite generation technique to prevent biofouling on the sensor surface.

One commercially available meter is that known as the DISA Type 55D05 battery-operated anemometer, a portable constant-temperature anemometer designed for measuring the instantaneous mass flow of gases and liquids, using as transducer either a hot-wire or a hot-film probe. Such hot-wire or hot film anemometer is an instrument for analysis of the micro structure of the velocity of a streaming gas or liquid. Micro structure of a velocity field is the instantaneous velocity of small fluid particles, i.e., a volume element of the fluid, small compared to the total stream but large compared to the distance between the molecules. The sensor used for these measurements is a thin electrically heated wire suspended between two prongs or a thin electrically heated metal film fused to a quantz support. The use of a hot sensor for measurements of particle velocity in fluid flows relies on laws governing convective heat transfer. Heat will also be transferred by natural convection and by conduction to the fluid and to the wire supports or film-backing material.

- 2 -

Thus, the principle of measurement is based on the convective heat ions from an electrically heated wire (or film) caused by the flow of gas or liquid surrounding the wire. Normally, the finite thermal capacitance of the transducer will affect the sensitivity and the phase relations so that changes in flow velocity can be measured only up to frequencies around 1000 Hz.

The constant-temperature anemometer employs a technique that minimizes the effect of thermal lag, thereby increasing the upper frequency limit by a factor of approximately 100. This is achieved by using amplifiers to keep the probe resistance (and hence also the probe temperature) very nearly constant. Fundamentally, what is measured is the amount of power required to keep the temperature constant. The upper frequency limit then depends essentially on how small the temperature variation can be kept, which in turn means that the amplifier must possess high sensitivity and have a wide-band characteristic.

Electrical conductors have been used in the past to measure flow velocity of fluid. Two patents relying on such phenomenon are:

(1) United States Patent No. 3.995,481 issued December 7, 1976 to Environmental Instruments Inc. The sensor includes a pair of electrical conductors connected in series. They are electrically excited so that their total series resistance is maintained constant by a feedback operation, and the potential at the junction of the two series connected conductors electrically changes in value as a function of direction flow. The total series output of the pair of conductors can be electrically observed to indicate lfuid velocity.

(2) United States Patent No. 4,000,648 issued January 4, 1977 to J.R. Olson. The electromagnetic flowmeter included a pair of spaced electrodes and a conductive coil wound thereabout having a small enclosed area. A sensor construction was also provided having a plurality of mutually perpendicular coils. A preferred embodiment used a conductive coil wound along a bent winding axis such that mutually perpendicular sensing electrodes may use the electromagnetically generated field from a single winding.

- 3 -

Electromagnetic water current meters are also well known in the art.
Among these are:

(1) United States Patent No. 3,855,858. Transducers are disclosed for
monitoring flow velocity in open bodies of water, i.e., rivers and oceans. The voltages induced on the several electrodes can be employed
to determine flow velocity with respect to the orientation of the transducer.

(2) Chambelle et al, United States Patent No. 3,641,816. This patent
discloses an electromagnetic water current meter which is associated
with a magnetometer for determining orientation of the meter with regard to the earth's magnetic field so that the components of flow velocity sensed by the transducer can be related to a fixed coordinate system.

(3) United States Patent NO. 4,050,301 issued September 27, 1977 to V.J.
Cushing. Apparatus was provided for conditioning the output of an electromagnetic water current meter to provide signals representative of orthogonal flow velocity components with reference to a known coordinate
system. Signal responsive means is provided which responds to the electromagnetic water current outputs, as well as to the signals representative of the orthogonal components of an artificial field to product
output signals representative of the flow velocity in a coordinate system determined by the direction of the artificial field.

(4) United States Patent No. 4,089,218 patented May 16, 1978 by V.J.
Cushing. That patented device included a cylindrical transducer body
of circular cross-section with two pairs of electrodes, each pair of
electrodes rotated 90° around the transducer axis with respect to the
other pair. Each electrode extends beyond the surface of the body of
the transducer and each pair of electrodes lie in a plane perpendicular to the longitudinal axis of the transducer. The planes of each of
the pairs of electrodes are offset with respect to each other preferably by a distance equal to the diameter of the transducer. Each elec-
trode is preferably of the form of a truncated cone.

- 4 -

(5) Canadian Patent No. 627,716 issued September 19, 1961 to Simmond Aerocessories Ltd. A device is provided measuring the rate of fluid flow by means of measurement of the mass. The flow sensing unit emits a signal which is dependent on the volume flow rate.

(6) Canadian Patent No. 704,644 issued March 2, 1965 to United Aircraft Corporation. A speed indicating apparatus is provided which uses electronic circuitry to measure the speed of a moving member. The basic principle involves the use of an electronic circuit and magnetic means for producing voltage impulses to the circuit in response to the speed of the moving member, enabling the speed to be read directly from a meter without the necessity of using devices containing moving parts.

(7) Canadian Patent No. 712,779 issued July 6, 1965 to W.M. Stapler. A fluid flow measuring device is provided employing a drag body supported in the fluid stream by a yieldable support assembly. A fluid flow measuring device is provided including a base member having a surface in contact with a relatively moving fluid and having a hole therethrough. A flexural drag body support member has an end rigidly attached to the base at the opening and extends outwardly therefrom into the fluid. The drag body support has an axial bore at one end in registry with the hole. A drag body is connected to the support. Finally, sensing means are connected to the support.

(8) Canadian Patent No. 744,832 issued October 18, 1966 to N.V. Orderzoekingsinstitulet Research. A system is provided for the continuous measurement of ion concentration (e.g., oxygen ions) by measuring an A.C. voltage which is proportional to the difference in ion concentration between a liquid and a reference liquid, which A.C. voltage is passed to an A.C. amplifier.

(9) Canadian Patent No. 746,233 issued November 15, 1966 to Union Carbide Corporation. An apparatus is provided for measuring the concentration of dissolved oxygen in water. The patented device is based on the concept of immersing in the liquid to be analyzed an electrode pair consisting of a first electrode composed of metallic thallium and a second reference electrode, and measuring the voltage produced by the electrode pair as a measurement of the concentration of oxygen dissolved in the liquid.

(10) Canadian Patent No. 864,073 issued February 16, 1971 to Gesellschaft zur Ferderung der Forscchung an der Eidg. Techn. Hochschule. An electrochemical apparatus is provided for measuring the content of oxygen in water. The patented device is an apparatus for the electrochemical determination of the oxygen content of a liquid by measuring the current which can be delivered by a system of electrodes, the novelty in the apparatus residing in the use of a device for cleaning the electrode surfaces.

(11) Canadian Patent No. 909,867 issued September 12, 1972 to Rauma-Repola OY. Means are provided for measuring, then metering proportions of, and finally regulating the concentration of, oxidizing compounds in water.

(12) Canadian Patent No. 912,647 issued October 17, 1972 to General Electric Company. Means are provided for measuring the concentration of oxygen dissolved in liquids. It involves deoxygenating the liquid to provide an oxygen-containing gas which is passed through a gaseous oxygen sensing system including a solid oxygen-ion electrolyte oxygen sensor where output signals are generated dependent on the quantity of oxygen.

(13) Canadian Patent No. 927,918 issued June 5, 1973 to Great Lakes Instruments Inc. Electrode structure is provided for determining, by electrical means, the amount of oxygen dissolved in water. The patented electrode is a solid material containing thallium in a major amount and mercury in a minor amount. A fluid mercury-thallium film is formed on the surface of the electrode.

(14) Canadian Patent No. 927,919 issued June 5, 1977 to Matsushita Electric Industrial Co. An apparatus is provided including a first electrode made of a metal electrochemically dissolved or deposited, a second electrode made of a valve metal and an aqueous solution containing a water soluble salt of the metal of the first electrode as an electrolyte. The electric quantity is detected by a variation in the interelectrode voltage or current occurring at a moment that the metal deposited on the second electrode is entirely removed from the second electrode by flowing a current between the two electrodes in the reversed direction.

(15) Canadian Patent No. 930,428 issued July 17, 1973 to Honeywell Inc. An electrochemical oxygen sensor is provided in which an electrolyzing current is impressed across an anode and a cathode and the oxygen partial pressure resulting therefrom is measured by any commercially available oxygen detectors, e.g., polarographic, galvanic, thermo-conductivity paramagnetic, or oxygen flow meter. The determinations are obtained by adjusting the electrode (anode) potential to a valve sufficient to produce gaseous oxygen.

(16) Canadian Patent No. 939,007 issued December 25, 1973 to Honeywell Inc. An electrochemical oxygen demand sensor is provided which can determine the organic waste content present in aqueous samples, including raw, treated, or partially treated sewage samples, as well as industrial waste products or the like. The invention involves an electrolytic determination of the amount of oxygen in the electrolyte.

(17) Canadian Patent No. 941,081 issued January 29, 1974 to General Electric Co. Reactant sensors are provided with an anode having a catalytic coating of platinum, palladium, and a selected third metal on a substrate and includes a current meter connected across the cathode and the anode.

(18) Canadian Patent No. 964,723 issued March 18, 1975 to John D. Skildum. An electronic means is provided for measuring the amount of oxygen in a liquid indirectly by measuring the capacitance due to an oxygen functional group in the liquid.

(19) Canadian Patent No. 998,105 issued October 5, 1976 to General Electric Company. Oxygen sensors are provided employing a noble metal electrode and an aqueous buffered solution of an electrolyte containing a halide salt and an oxidizable fuel. The oxygen sensor includes a first electrode of a noble metal, a second electrode spaced from the first electrode, the second electrode comprising silver with at least a partial layer of silver halide thereon, an aqueous buffered solution of an electrolyte containing a halide salt and an oxidizable fuel contacting at least a portion of both electrodes.

(20) Canadian Patent No. 1,008,929 issued April 19, 1977 to Westinghouse Electric Corporation. A system is provided for measuring the salinity of sea water involving the use of electrolytic cells for the measurement of conductivity, and an electric circuit which provides an output signal proportional to the ratios of the conductivities.

(21) Canadian Patent No. 1,011,815 issued June 7, 1977 to Petrolite Corporation. Electrodes are provided to measure the conductivity of an electrolyte involving a d.c. system for such conductivity measurements using measurements of the polarization potential of four metallic electrodes. In the patented device, the salinity indication is obtained by the use of a conductivity cell for measuring the water conductivity, and of a standard cell for measuring the conductivity' of a standard sample. The conductivity ratio is then obtained. The resultant is transmitted up a wire link to processing equipment.

(22) Canadian Patent No. 975,985 issued October 14, 1975 to Robert Shaw Controls Company. A probe floating device is provided which includes a shielding surface, a communication window, a probe having a sensing means disposed in the window, and specific probe mounting means. The probe mounting means mounts the probe with the sensing means projecting into the window. Liquid is used for washing past the shielding surface and the end of the probe.

Thus the prior art provides electrochemical probes including a housing, at least two electrodes and a current meter connected across two electrodes.

- 8 -

Assessment of the Background Art

Even in the various patents directed to the determination of various characteristics of an electrolyte, the problem of a suitable probe device has not been completely solved. Furthermore, the prior art has not provided a means for determination of the relative motion of the surface layer of sea water. In addition even with this prior art, the problem of measuring the local relative motion of water and particularly the near surface motion and turbulence in sea water is still largely unsolved.

The invention as claimed is intended to provide a solution to these problems by providing (d) amplifier means having input and output disposed in the housing and having its input connected to a selected one of the first electrode or the second electrode; (e) means for displaying signals at the output; and (f) means for supplying electrical power to the non-selected other of the first electrode or the second electrode and to the amplifier means, and for conducting the output of the amplifier means to means for displaying signals at the output; the signals being displayed being proportional to the oxygen transport rate across the surface of the selected electrode adjacent the local area of the electrolyte, so that, by measuring the value of the oxygen transport rate, the magnitude of the relative local motion of electrolyte in the vicinity of the second electrode is provided.

Advantageous Effects of the Invention

By this invention, an instrument is provided whose capabilities are comparable to those of hot-film and hot-wire anemometers, and yet is simpler, considerably more rugged and operates on a different principle. This invention makes use of the well-known phenomenon of specific ion polarography to determine the relative local motion of sea water. Two reference texts describing such phenomenon include "Electroanalytical Methods in Biochemistry" by William Purdy, published by McGraw Hill, 1965; and "Polarographic Techniques" by Lui Meites, published by John Wiley, 1965 (2nd Ed.).

- 9 -

This invention provides an industrially useful invention by providing an instrument whose technical simplicity, response time, and range is unique among water velocity measuring devices.

The inventive apparatus measures local relative motion of an electrolyte, i.e., sea water, e.g., near the surface by monitoring the local oxygen transport rates of such electrolyte and, through an initial calibration, translating such oxygen transport rates into a signal which is an indication of relative electrolyte motion.

## Description of the Invention

By one embodiment of this invention, the first electrode is of silver and the second electrode is of platinum.

By another embodiment, the amplifier means has its input connected to the second electrode.

By yet another embodiment, the electrochemical anemometer includes means for supplying the first electrode with a stable voltage.

By a further embodiment thereof, the stable voltage is a predetermined value between -0.1V and -0.9V on the oxygen reducing electrode developed from means (f) for supplying electrical power by an electronic circuit in the housing.

By another embodiment, the means (e) for displaying such output is a voltmeter.

By one preferred embodiment, the housing has a rigid support rod projecting therefrom; the silver electrode comprises a silver wire coiled around at least part of the support rod; and the platinum electrode protrudes from the tip of the rod.

By another preferred embodiment, the housing is non-conductive, watertight and buoyant; the silver electrode is disposed along at least an

0049027

- 10 -

outer surface of the housing; and the platinum electrode projects from a terminal end of an insulated flexible wire lead supported at its end by a low inertial float.

By a further embodiment, the low inertia float has means for providing an adjustable depth setting.

The present invention also provides a method for measuring relative local motion of an electrolyte in which an oxygen sensor is immersed into such electrolyte at the region where its local motion is to be determined; characterized by the steps of monitoring the oxygen transport rates by the sensor, translating the value of the oxygen transport rate into a signal which is an indication of the local motion of the electrolyte in the vicinity of the sensor.

In an embodiment of such method of this invention for measuring the relative surface motion of an electrolyte including the steps of (a) immersing an oxygen sensor into the electrolyte at a selected depth near the surface of the electrolyte characterized by the steps of (b) monitoring the oxygen transport rates into a signal which is an indication of the relative motion of the electrolyte in the vicinity of the sensor.

By an embodiment thereof, step (b) comprises monitoring the oxygen transport rates at the first electrode; and step (c) comprises a determination of the relative motion of the electrolyte in the vicinity of the first electrode.

By another embodiment, step (a) of immersing the electrodes is characterized by supporting the first electrode at the selected depth near the surface by a low inertial float, e.g., an inertially tuned float.

By another embodiment, step (b) of monitoring is characterized by: converting the electrical current into a proportional voltage; and then amplifying the proportional voltage.

By yet another embodiment, step (c) of translating is characterized by displaying the amplified proportional voltage by means of a voltmeter indicating units of velocity.

The principle of operation of this invention is based on the fact that the signal, in all cases, is proportional to the rate at which oxygen reaches the Pt electrode. The rate of oxygen transport is determined by the oxygen concentration and the electrode surface area as well as diffusion rates and electrolyte flow rates. The oxygen concentration is assumed constant (or is measured independently by pulse techniques). Since the electrode geometry is also constant, the rate of oxygen transport will be essentially determined by the rate of diffusion through the stationary boundary layer surrounding the electrode. Boundary layer thickness is a function of the relative motion of the electrolyte surrounding the electrode. Thus, the signal is proportional to the oxygen transport rates, which are, in turn, an indication of relative electrolyte motion.

Thus, in a preferred, embodiment of this method, the oxygen transport rates of the near surface layer of sea water, measured as a corresponding electrochemical current, is connected into a proportional voltage, which voltage is then amplified and displayed by a voltmeter indicating units of velocity.

Description of at least One Way of Carrying Out the Invention by Reference to the Drawings

Several ways of carrying out the invention are described in detail below with reference to the accompanying drawings in which:

Figure 1 is a side elevational view of an electrochemical anemometer according to one embodiment of the present invention;

Figure 2 is a side elevational view of an electrochemical anemometer according to another embodiment of the present invention;

Figure 3 is a circuit schematic of an amplifier and power supply used

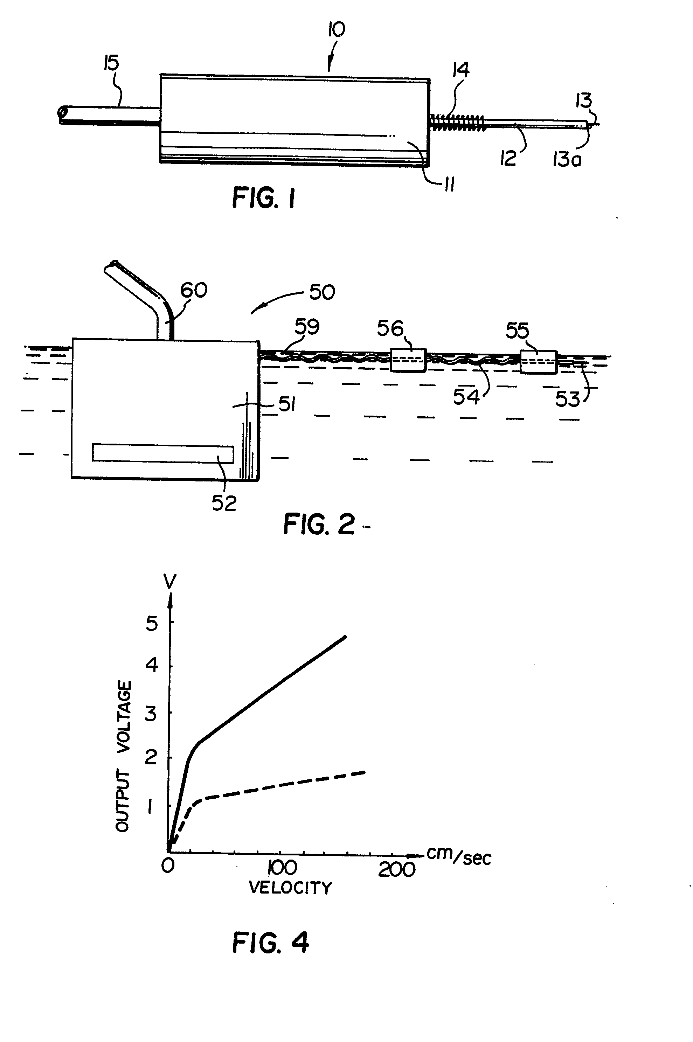

in the embodiments of Figures 1 and 2; and

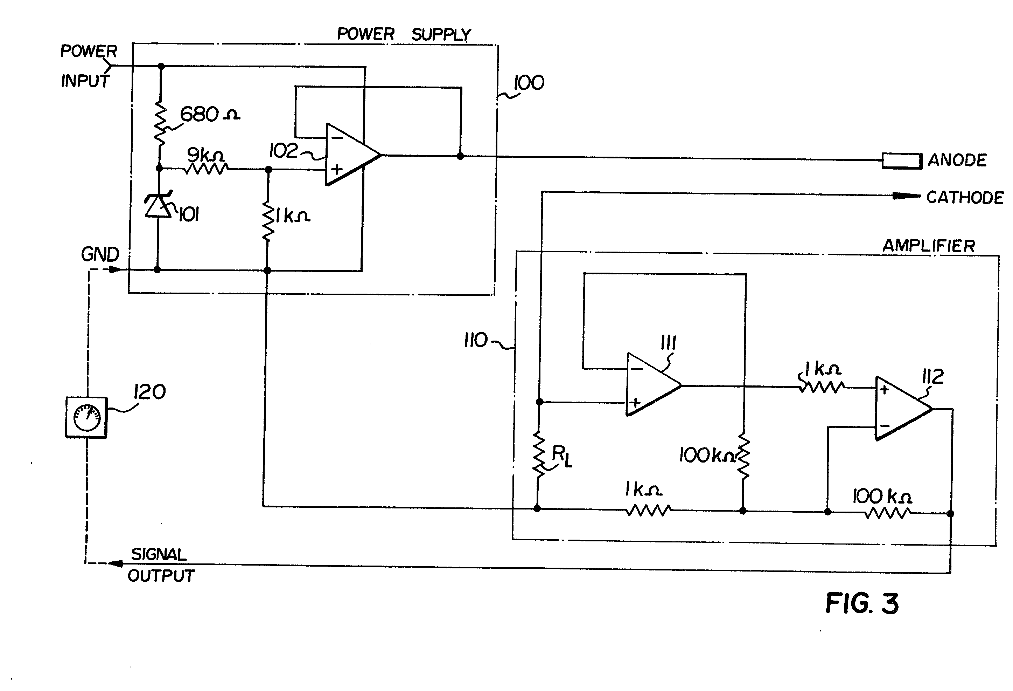

Figure 4 shows typical graphs for translating the output voltage of the amplifier in Figure 3 into a corresponding surface water velocity.

As seen in Figures 1, the electrochemical anemometer 10 includes a water-tight, non-conductive housing 11 within which is disposed an electronic amplifier (shown in Figure 3) for the probe output signal. Projecting from one end of the housing 11 is a conductive metal tube, e.g., a hollow steel tube 12 coated with an epoxy resin to make it insulating. The free end of the tube 12 has a short platinum wire electrode 13 (cathode) attached thereto with sealant epoxy resin, which substantially prevents electrical contact between the electrode 13 and the tube 12 and water from entering into the tube 12 and the housing 11. The electrode 13 is connected to an amplifier inside the housing 11 by means of an insulated wire (not seen). Wound around the other end of the tube 12 is an exposed silver wire electrode 14 (anode), which end is free; the other end of the silver wire anode 14 enters the housing 11 and is connected to a power supply (shown in Figure 3). Emerging from the other end of the housing 11 is a three-wire, water-tight cable 15, one wire supplying power to the silver electrode 14 and the electronic circuitry in the housing 11, another wire being the circuit common or ground (GND,) and the final wire conducting the output of the amplifier and thus the amplified probe output signal to a measuring device separate from the electrochemical anememeter 10.

The manner of operation of the above-described electrochemical anemometer 10 will be explained in conjunction with Figures 3 and 4 hereinafter.

The electrochemical anemometer 50 shown in Figure 2 comprises a buoyant non-conductive housing 51, to the outside of which is attached an exposed silver strip anode 52, connected to the power supply inside the housing 51 in the manner explained in Figure 1. An exposed platinum wire cathode 53 projects from the end of a flexible insulated wire lead 54. Close to the cathode 53 and surrounding the lead 54 is a low in-

- 13 -

ertia float or inertially tuned float 55, to minimize unwanted mechanical resonance, that keeps the electrode 53 a desired, predetermined distance below the surface of the water 59. This will depend on the size and buoyancy of the float 55 and generally, in marine surface energy measurements, will be less than 10 cm. A second float 56 surrounds the lead 54 midway between the housing 51 and the electrode 53. Generally speaking, the length of the lead 54 is approximately 1 meter for typical applications. The lead 54 enters the housing 51 through an epoxy sealed hole just below the surface of the water 59. Again the electrochemical anemometer 50 is connected to powering and monitoring devices by a three-wire cable 60 in the manner explained in Figure 1 that may also serve as a tether.

While the tube 12 in Figure 1 has been described as a hollow steel tube, it may be any structurally conducting metal tubular material, e.g., an aluminum tube. Alternatively, it may be a rigid conductor insulated on the surface and electrically connected to the electrode. The coating to make the tube insulating or to seal the cathode may alternatively be natural or synthetic rubber.

The cathode/anode couple as described may be either platinum/silver or the following, as well known in the art: a cathode of platinum or gold or any other noble metal with a corresponding anode of silver, silver/ silver chloride, platinum or gold; each of the anode or cathode being a plating on a substrate, i.e., silver or platinum or other noble metals on the substrate; each of the anode or cathode of a metal, e.g., gold, platinum, nickel, or stainless steel on a substrate; a cathode of porous carbon, or silver, and the anode being platinum + palladium + a third metal, e.g., lead; each of the anode and cathode being platinum, gold, iridium, palladium, rhodium, silver, iron, cobalt or nickel, e.g., microporous nickel; each of the anode and cathode being platinum, gold or silver, or a valve metal, e.g., tungsten, tantallum, niobium, molybdenum or aluminum plated with silver, gold or lead; an anode or cathode comprising thallium/mercury; one electrode being a mercury alloy, e.g., a silver amalgum or gold, platimum, silver or nickel, while the other electrode is lead; or one electrode being metallic thallium, while

0049027

- 14 -

the other electrode is a calomel electrode, or a silver/silver chloride electrode. However, it is essential that the proper electrode pair be selected according to principles well known in this art, since the electrochemistry of the reaction renders one electrode motion insensitive.

Figure 3 shows the electronic circuitry housed in either of the housings 11 and 51. Block 100 in Figure 3, labelled Power Supply, accepts +9 volt at the power input terminal (supplied by either of the cable 15 and 60) and converts it to a more precisely regulated +0.63 volt by means of a conventional circuit comprising zener diode 101, an operational amplifier 102 and three resistors as shown within the block 100. A zener diode 101 type IN5234 is used, and the operational amplifier 102 is one-quarter of an Integrated Circuit (IC) type LM324. The block 110, labelled Amplifier in Figure 3, is an amplifier providing a voltage gain of approximately 48 dB and serves to convert an electrode current developed by the platinum cathode (13 in Figure 1 or 53 in Figure 2) of between 20 to 200 microamperes to a voltage of between 0.5 to 5 volts. The amplifier 110 comprises two stages, each being an operational amplifier 111 and 112, each of which is conveniently one-quarter of the I.C. LM 324. The first stage 111 is simply an inoperative transforming voltage follower. Feedback resistors for the stage 112 are as shown in Figure 3. A resistor $R_L$ between the non-inverting input of the amplifier 111 and the common terminal GND is the load resistor for the platinum cathode. The current flowing from the platinum cathode, which is a direct measure of the oxygen content in the aqueous electrolyte around the probe, being between 0 and 200 microamperes (depending on the size of the electrode and the velocity of the electrolyte) developes across the load resistor $R_1$ a voltage between 0.000 and 0.02 volts. This voltage is amplified to the range of 0.0 to 5 volts. The latter is the output signal and may be displayed directly by a voltmeter 120 that is normally remote from the electrochemical anemometer in the aqueous electrode. The voltmeter 120 may be directly calibrated in units of velocity and would thus translate the oxygen-content-related voltage directly into surface velocity of the aqueous electrolyte.

- 15 -

The silver anode (14 or 52 in Figures 1 or 2) has a potential of 0.63 volt impressed thereon by the power supply 100 which, due to its low output impedance, is closed to an ideal voltage source. Since the current flowing into the anode is minimal, the power supply 100 may be eliminated altogether and the voltage may be supplied by a suitably low resistance connection without great loss of measurement accuracy.

As is well known in the art of specific ion polarography, in an aqueous electrolyte, a virtual current is developed mediated by electrochemical ion exchange between the anode and the cathode. At the anode, if silver, the silver is converted to silver chloride, while at the cathode, oxygen is reduced to hydrogen peroxide. If there is any leakage of current through the aqueous electrolyte between anode and cathode, it would generally be below the threshold of the electrometer being used. It has been found, however, that such leakage current is minimal and does not affect the measurement accuracy appreciably. As a result, it has also been found that the spacing between electrodes is not critical. Neither does the salinity of the aqueous electrolyte greatly affect the measurement, so that one instrument calibrated in certain aqueous electrolytes would be functional in others.

Figure 4 shows typical calibration curves of the electrochemical anemometer, relating to the output voltage to the velocity. The continuous curve, within the indicated approximate tolerance, is rated for three different aqueous electrolytes, e.g., sea water of 25 - 30 ppm salinity and for brackish water of 3 ppm salinity. The broken curve is for tap water of 0 ppm salinity. As may be seen, the resolution in the latter case is considerably less than in the former. The response time of the electrochemical anemometer for the usable part of continuous curve is less than 0.01 seconds. The electrochemical anemometer thus follows changes in the water motion sufficiently fast. It has been found that the electrometer is usable and in fact is highly sensitive between 1 mm/sec and 100 mm/sec as well as the ranges indicated on the curve. In this respect, it is unique among oceanographic current meters which usually have a lower threshold greater than 25 mm/sec. The response time of this apparatus has been determined as being at least 0.01 seconds.

The size of each of the electrodes, particularly the platinum electrode, of course affects the output current, as does the voltage impressed on the silver electrode. Nevertheless, it has been found that signal strength is theoretically constant for an impressed voltage between -0.1 and -0.9 volts Pt vs Ag. It is thus necessary to calibrate each particular design empirically and to maintain uniformity of manufacture. It goes without saying that the amplifier 110 should have a reasonably stable gain factor.

Since the silver in the silver electrode or anode is converted to silver chloride, it is also possible to start with a silver/silver chloride anode with equally good results. Other suitably selected cathode/anode couples described hereinabove may also be used.

0049027

CLAIMS:
— 1 —

1. An electrochemical anemometer for measuring relative local motion in an electrolyte, including (a) a housing (11 or 51); (b) an exposed first electrode (13 or 53) (e.g. of silver) attached to the housing (11 or 51); and (c) an exposed second electrode (14 or 54) e.g. of platinum attached to the housing (11 or 51) and spaced apart from the first electrode (13 or 53), characterized in that there is included: (d) amplifier means (110) having input (15 or 60) and output disposed in said housing (11 or 51) and having its input connected to a selected one of said first electrode or said second electrode; (e) means (120)(e.g. a voltmeter) for displaying signals at said output; and (f) means (100) for supplying electrical power to the non-selected other of said first electrode or said second electrode and to said amplifier means, and for conducting the output of said amplifier means to means for displaying signals at said output; said signals being displayed being proportional to the oxygen transport rate across the surface of the selected electrode adjacent said local area of said electrolyte, so that, by measuring the value of said oxygen transport rate, the magnitude of the relative local motion of electrolyte in the vicinity of said second electrode (14 or 54) is provided.

2. The electrochemical anemometer of claim 1 characterized in that said amplifier means (110) has its input connected to said second electrode (14 or 54).

3. The electrochemical anemometer of claim 1 characterized by including means (102) for supplying said first electrode with a stable voltage.

4. The electrochemical anemometer of claim 3 characterized in that said stable voltage is a predetermined value between −0.1V and 0.9V (related to a Pt/Ag electrode) developed from said means (f) for supplying electrical power by an electronic circuit in said housing.

5. The electrochemical anemometer of claims 1, 2, 3 or 4 characterized in that said housing (11) has a rigid support rod (12) projecting therefrom; in that said silver electrode (14) comprises a silver

- 2 -

wire coiled around at least part of said said support rod (12) and in that said platinum electrode (13) protrudes from the tip (13a) of said rod (12).

6. The electrochemical anemometer of claims 1, 2, 3 or 4 characterized in that said housing (51) is non-conductive, water-tight and buoyant; in that said silver electrode (52) is disposed along at least an outer surface of said housing; and in that said platinum electrode (53) projects from a terminal end of an insulated flexible wire lead (54) supported at its said end by a low inertia float (55, 56).

7. The electrochemical anemometer of claims 1, 2, 3 or 4 characterized in that said housing (51) is non-conductive, water-tight and buoyant; in that said silver electrode (52) is disposed along at least an outer surface of said housing; in that said platinum electrode (53) projects from a terminal end of an insulated flexible wire lead (54) supported at its said end by a low inertia or inertially tuned float; (55, 56) and in that said float (56) has means for producing an adjustable depth setting.

8. A method for measuring relative local motion e.g. relative surface motion in an electrolyte including the steps of (a) immersing an oxygen sensor (e.g. a spaced-apart first electrode/second electrode couple especially where platinum is the first electrode and where silver is the second electrode, and is more preferably by supporting said first electrode at said selected depth near the surface by low inertia or inertially tuned float) into said electrolyte (e.g. sea water) at the region where its local motion is to be determined, e.g. at the selected depth, characterized by the steps of (b) monitoring the oxygen transport rates by said sensor; and (c) translating the value of said oxygen transport rates into an indication of the relative local electrolyte motion in the vicinity of said oxygen sensor.

9. The method of claim 8 characterized in that step (b) comprises monitoring the oxygen content of said first electrode; and in that step (c) comprises a determination of the relative motion of said

0049027

- 3 -

electrolyte in the vicinity of said first electrode.

10. The method of claims 8 or 9 <u>characterized in that</u> step (b) ·of monitoring comprises: converting said electrical current into a proportional voltage; and then amplifying said proportional voltage.

11. The method of claims 8, 9 or 10 <u>characterized in that</u> step (c) of translating comprises: displaying said amplified proportional voltage by means of a voltmeter indicating units of velocity.

1/2

0049027

FIG. 1

FIG. 2

FIG. 4

0049027

FIG. 3

## DOCUMENTS CONSIDERED TO BE RELEVANT

| Category | Citation of document with indication, where appropriate, of relevant passages | Relevant to claim |
|---|---|---|
| A | <u>GB - A - 1 066 867</u> (CESKOSLOVENSKA AKADEMIE VED) <br> + Claim 1; fig. 2 + | 1,8 |
| A | <u>US - A - 3 677 083</u> (VAN BREUGEL) <br> + Column 2; fig. + | 1,8 |
| A | <u>FR - A - 1 573 374</u> (HLADIK) <br> + Claim + | 1,8 |
| D,A | <u>US - A - 4 000 648</u> (OLSON) <br> + Claim 1; fig. 4,7 + <br> ---- | 1,8 |

**CLASSIFICATION OF THE APPLICATION (Int. Cl.³)**

G 01 P 5/00
G 01 P 5/08
G 01 F 1/56

**TECHNICAL FIELDS SEARCHED (Int. Cl.³)**

G 01 P 5/00
G 01 F 1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

X The present search report has been drawn up for all claims

| Place of search | Date of completion of the search | Examiner |
|---|---|---|
| VIENNA | 30-12-1981 | STÖGER |